# EUROPEAN PATENT APPLICATION

(11) **EP 0 850 999 A2**
(43) Date of publication of application: **01.07.1998**
(21) Application number: 97310263.5
(22) Date of filing: 18.12.1997
(51) Int. Cl.: C08L 83/04

(54) **Silicone release coating compositions**

(30) Priority: 30.12.1996 US 774479
(71) Applicant: DOW CORNING CORPORATION, Midland, Michigan 48686-0994 (US)
(72) Inventor: Chung, Kyuha, North Midland, Michigan 48642 (US); Brasseur, Michael Joseph, Saginaw, Michigan 48609 (US)
(74) Representative: Lewin, John Harvey

(57) **Abstract**

The present invention claims a release modifier comprising a mixture of (i) an organopolysiloxane having at least two alkenyl groups per molecule and (ii) fluorosilicone resin. This invention also provides a curable silicone release coating composition comprising the claimed release modifier in combination with an organohydrogensilicon compound selected from the group consisting of (i) a linear organohydrogenpolysiloxane having at least two silicon-bonded hydrogen atoms per molecule, (ii) a siloxane resin having silicon-bonded hydrogen groups, and (iii) a mixture of (i) and (ii); (C) a curable platinum group metal catalyst and, optionally, an inhibitor, a bath life extender and/or a diluent. The compositions of this invention are especially useful as release coatings for pressure sensitive adhesives.

## Description

The present invention relates to silicone release coating compositions containing release modifiers. More particularly, it relates to silicone release coating compositions containing a fluorosilicone resin release modifier.

Silicone release coatings which are coated and cured onto various substrates often have very low release forces. Such forces are not always desirable because many applications require a certain amount of adhesive behavior or a release liner with differing release forces. It is known to incorporate additives into silicone-based release coatings which cause an increase in the release force required to peel off an adhesive label. Such additives are called controlled-release additives or "CRAs", and in some cases high-release additives or "HRAs". These additives have also been described as release modifiers or 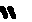 RMs*"*.

Materials often used as CRAs include silicone resins comprising monovalent (M) siloxane groups, (R₃SiO_{1/2} groups wherein R is a monovalent hydrocarbon group) and tetravalent (Q) siloxane groups (SiO_{4/2} groups) only, otherwise known as MQ resins. Siloxane MQ resins as additives to silicone release coatings have been described in the art, for example, U.S. Patents 3,527,659 or 4,332,518 and EP-A 0 108 208.

Other alkenyl MQ resins have also been disclosed as useful additives to silicone release coating compositions, for instance, U.S. Patent 4,609,574 and EP-A 0 523 660.

More recently, other MQ release modifiers (RMs) have been disclosed, for example, in U.S. Patent Nos. 5,468,816 and 5,468,828.

Conventional MQ resins and vinyl or alkenyl functional MQ resins do not, however, provide industry with solutions to all of their retirements. There is a continuing need for improved CRAs which give increased release forces. There is a particular need to find CRAs which will provide a controllable release force at low speed delamination and at higher speed delamination.

Fluorosilicone siloxane compounds have also been described in the art, for example, U.S. Patent Nos. 3,328,349; 4,465,805 and 5,371,155. The present invention relates to a release modifier for silicone release coatings which comprises a mixture of a fluorosilicone resin and an alkenyl functional organopolysiloxane.

The present invention relates to a curable silicone release coating composition comprising an alkenyl functional organopolysiloxane, an organohydrogensilicon compound, a platinum group metal-containing catalyst, a fluorosilicone resin, and optionally an inhibitor.

The present invention further relates to a curable silicone release coating composition obtained by a method comprising mixing an alkenyl functional organopolysiloxane, an organohydrogensilicon compound, a platinum group metal-containing catalyst, a fluorosilicone resin, and optionally an inhibitor.

The present invention relates to a release modifier comprising a mixture of (i) an organopolysiloxane containing at least two alkenyl groups per molecule and (ii) a fluorosilicone resin essentially consisting of at least one R₃SiO_{1/2} (M) unit and at least one SiO_{4/2} (Q) unit wherein R is independently selected from the group consisting of a monovalent hydrocarbon group having from 1 to 10 carbon atoms, an alkenyl group having from 2 to 10 carbon atoms, and a fluorine atom-containing group having the formula -R¹B wherein R¹ is an alkylene group having at least 2 carbon atoms and B is a perfluoroalkyl group having from 1 to 12 carbon atoms, the molar ratio of M units to Q units ranges from 0.8/1 to 4/1, and with the proviso that there is on average at least one fluorine atom-containing group, as defined above, per molecule.

The alkenyl groups of component (i) include groups such as vinyl, allyl, 3-butenyl, 4-pentenyl, 5-hexenyl, 6-heptenyl, 7-octenyl, 8-nonenyl, 9-decenyl, 10-undecenyl, 4,7-octadienyl, 5,8-nonadienyl, 5,9-decadienyl, 6,11-dodecadienyl, and 4,8-nonadienyl.

Preferably, component (i) is an organopolysiloxane having its formula selected from the group consisting of R³₃SiO(R²₂SiO)ₓ(R²R³SiO)_{y}SiR³₃, R³₃SiO(R²₂SiO)ₓSiR³₃, and R³₃SiO(R²R³SiO)_{y}SiR³₃ wherein R² is independently selected from monovalent hydrocarbon or halohydrocarbon radicals free of aliphatic unsaturation and having from 1 to 10 carbon atoms, R³ is independently selected from the group consisting of R² and an alkenyl group, x has a value of from greater than zero to 7000, and y has a value of from greater than zero to 350 with the proviso that there are at least two alkenyl groups per molecule.

The monovalent radicals of R² can contain up to 10 carbon atoms and include hydrocarbon or halohydrocarbon radicals free of aliphatic unsaturation. Monovalent hydrocarbon radicals free of aliphatic unsaturation include alkyl radicals such as methyl, ethyl, propyl, butyl, hexyl, octyl and decyl, cycloaliphatic radicals such as cyclohexyl, aryl radicals such as phenyl, tolyl and xylyl, and aralkyl radicals such as benzyl and phenylethyl. Highly preferred monovalent hydrocarbon radicals for R² are methyl and phenyl. Monovalent halohydrocarbon radicals free of aliphatic unsaturation include any monovalent hydrocarbon radical noted above which is free of aliphatic unsaturation and has at least one of its hydrogen atoms replaced with a halogen, such as fluorine, chlorine or bromine. The several R² radicals can be identical or different, as desired, and preferably at least 50 percent of all R² radicals are methyl.

The alkenyl group of R³ is preferably a group having the formula -(CH₂)ₐCH=CH₂ or -(CH₂)_{b}CH=CH-(CH₂)_{c}CH=CH₂ wherein a has a value of 0 to 20, b has the value of 0 to 9, and c has the value of 3, 4 or 5. The disclosure of U.S. Patent 4,609,574, shows highly-preferred higher alkenyl functional organopolysiloxanes.

It is highly preferred that component (i) is an organopolysiloxane having its formula selected from the group consisting of ViMe₂SiO(Me₂SiO)ₓSiMe₂Vi, Me₃SiO(Me₂SiO)ₓ(MeViSiO)_{y}SiMe₃, Me₃SiO(MeViSiO)_{y}SiMe_{3'} ViMe₂SiO(Me₂SiO)ₓ(MeViSiO)_{y}SiMe₂Vi, ViMe₂SiO(MeViSiO)_{y}SiMe₂Vi, HexMe₂SiO(Me₂SiO)ₓSiMe₂Hex, Me₃SiO(Me₂SiO)ₓ(MeHexSiO)_{y}SiMe₃, Me₃SiO(MeHexSiO)_{y}SiMe₃, HexMe₂SiO(Me₂SiO)ₓ(MeHexSiO)_{y}SiMe₂Hex and HexMe₂SiO(MeHexSiO)_{y}SiMe₂Hex wherein Me, Vi and Hex denote methyl, vinyl and 5-hexenyl, respectively, x has a value of from greater than zero to 7000, and y has a value of from greater than zero to 350. Preferably, x has a value of from 10 to 200, and y has a value of from 1 to 10.

The value of the subscripts x and y above are such that the organopolysiloxane of Component (i) preferably has a viscosity at 25°C of at least 40 millipascal-seconds (mPa·s) (1 mPa·s = 1 centipoise (cP)). Component (i) can have an ultrahigh viscosity similar to a state of raw rubber. If the viscosity is less than 40 mPa·s, the composition may be difficult to coat onto a substrate. If the compositions of the present invention are solventless, the viscosity at 25°C. of the component is preferably 40-10,000 mPa·s, and especially 40-5000 mPa·s. If the compositions are in the form of a solution, the viscosity can range from 100,000 mPa·s to the viscosity of a raw rubber composition, however, it is preferred that if the composition is in the form of a solution that component (i) have a viscosity of 500,000 mPa·s or more.

The alkenyl functional organopolysiloxanes of Component (i) are well known in the art, many of these being available commercially, and further description thereof is considered unnecessary.

Suitable fluorosilicone resins for use as component (ii) in this invention consist essentially of at least one monovalent (M) siloxane unit and at least one quadravalent (Q) siloxane unit as indicated above. However, it is allowable to have some other units present without causing any negative effect. Extra units may include A'OSi_{3/2} and AOR₂SiO_{1/2} units where A and A' are each selected from a hydrogen atom or a monovalent hydrocarbon radical having from 1 to 10 carbon atoms, and even some divalent and trivalent siloxane units, provided the extra units do not make up more than 10% of the total number of units in the resin molecule. It is also preferred that monovalent (M) units wherein A denotes a hydrogen atom are kept to a minimum. These latter units are usually present as result of incomplete reaction of the reagents used to form the fluorosilicone resin depending on the manufacturing method. It is further preferred that the group A is methyl.

The fluorosilicone resins of this invention have a molar ratio of M units to Q units of from 0.8/1 to 4/1. At molar ratios below 0.8/1, the MQ resins may be insoluble in useful potential solubilizers. Potential solubilizers include organic solvents such as xylene or toluene. Molar ratios of M units to Q units above 4/1 are not possible with conventional tetravalent silicon. It is preferred that the fluorosilicone resins of the invention have a molar ratio of M to Q units of 1.6/1 to 4/1, more preferably from 2/1 to 4/1.

The group R can be a monovalent hydrocarbon group having from 1 to 10 carbon atoms or an alkenyl group having from 2 to 10 carbon atoms. Monovalent hydrocarbon groups include alkyl groups, such as methyl, ethyl, propyl, butyl, hexyl, octyl, and decyl; cycloaliphatic groups, such as cyclohexyl; aryl groups, such as phenyl, tolyl and xylyl; aralkyl groups, such as benzyl and phenylethyl. Highly preferred monovalent hydrocarbon groups for R are methyl or phenyl.

The group R can also be an alkenyl group such as vinyl, propenyl, butenyl, hexenyl, heptenyl, octenyl, nonenyl and decenyl. If an alkenyl group is present in the fluorosilicone resins of the present invention, it is preferably vinyl.

Each perfluoroalkyl group, B, is bonded to a silicon atom by way of R¹, an alkylene group which separates B from Si by at least two carbon atoms. Each R¹ group can have a normal or branched structure. Examples of suitable R¹ groups include -CH₂CH₂-, -CH₂CH₂CH₂-, -CH(CH₃)CH₂-, -(CH₂)₄-, -CH(CH₃)CH₂CH₂-, -CH₂(CH₃)CH₂CH₂-, -(CH₂)₅-, -(CH₂)₆-, -CH₂CH₂CH(CH₂CH₃)CH₂-, -(CH₂)₈-, -(CH₂)₁₀-, -(CH₂)₁₈- or (-C₆H₄CH₂-). It is preferred that R¹ is selected from -CH₂CH₂- or -CH₂CH₂CH₂-.

The perfluoroalkyl group B can have a normal or a branched structure and can have 1 to 12 carbon atoms. Examples of suitable B groups include -CF₃; -C₂F₅ groups such as -CF₂CF₃; -C₃F₇ groups such as -(CF₂)₂CF₃; -C₄F₉ groups such as -(CF₂)₃CF_{3,} -CF₂CF(CF₃)₂, -C(CF₃)₃ or -CF(CF₃)CF₂CF₃; -C₅F₁₁ groups such as -(CF₂)₄CF₃; -C₆F₁₃ groups such as -CF₂(CF₂)₄CF₃; -C₇F₁₅ groups such as -(CF₂CF₂)₃C₃, -C₈F₁₇ groups, -C₉F₁₉ groups, -C₁₀F₂₁ groups, -C₁₁F₂₃ groups and -C₁₂F₂₅ groups. Preferably, the perfluoroalkyl group B has from 4 to 8 carbon atoms. It is preferred that the perfluoroalkyl group B is selected from the group consisting of -(CF₂)₃CF₃, -CF₂CF(CF₃)₂, -C(CF₃)₃ and -CF(CF₃)CF₂CF₃.

Fluorosilicone resins useful in this invention are exemplified by fluorosilicone resins essentially consisting of: RMe₂SiO_{1/2} (M) and SiO_{4/2} (Q) units, essentially consisting of: RMeViSiO_{1/2} (M) and SiO_{4/2} (Q) units, essentially consisting of: RMe₂SiO_{1/2} (M), Me₃SiO_{1/2} (M), and SiO_{4/2} (Q) units, essentially consisting of: RMe₂SiO_{1/2} (M), Me₂ViSiO_{1/2} (M), and SiO_{4/2} (Q) units, and essentially consisting of: RMe₂SiO_{1/2} (M), Me₂ViSiO_{1/2} (M), Me₃SiO_{1/2} (M) and SiO_{4/2} (Q) units, wherein Me denotes methyl, Vi denotes vinyl, R is a group having the formula -R¹B wherein R¹ is selected from the group consisting of -CH₂CH₂- and -CH₂CH₂CH₂-, and B is selected from the group consisting of -(CF₂)₃CF₃, -CF₂CF(CF₃)₂, -C(CF₃)₃ or -CF(CF₃)CF₂CF₃, and the molar ratio of M units to Q units is from 2/1 to 4/1.

The fluorosilicone resins of this invention preferably have a number average molecular weight (Mn) from 400 to 15,000, and preferably from 400 to 7,500, and most preferably from 400 to 4000. When the Mn is greater than 15,000, the resins begin to lose their solubility in most solvents and tend to include significant amounts of gel.

The fluorosilicone resins of this invention are prepared by reacting, for example, a benzene soluble siloxane resin copolymer consisting essentially of Me₃SiO_{1/2} (M), Me₂ViSiO_{1/2} (M) and SiO₂ units wherein Me denotes methyl, Vi denotes vinyl, the molar ratio of M units to Q units is 0.7/1, and wherein the siloxane resin copolymer contains from 1.75 to 2.3 weight percent of vinyl with, for example, methyl(perfluorobutylethyl) dichlorosilane or dimethyl(perfluorobutylethyl) chlorosilane under a nitrogen blanket at temperatures of 70 to 80°C. for 1 hour.

It is preferred that from 10 to 1000 parts by weight of Component (ii) be used, and it is highly preferred that from 50 to 150 parts by weight of Component (ii) be employed per 100 parts by weight of Component (i).

The release modifier of this invention can further comprise a siloxane resin consisting essentially of at least one R⁴₃SiO_{1/2} (M) unit and at least one SiO_{4/2} (Q) unit wherein R⁴ is independently selected from the group consisting of a monovalent hydrocarbon group having from 1 to 10 carbon atoms and an alkenyl group having from 2 to 10 carbon atoms. The siloxane resins have a molar ratio of M units to Q units of from 0.4/1 to 4/1. It is preferred that the siloxane resins of the invention have a molar ratio of M to Q units of 0.6/1 to 1.9/1, more preferably from 1.2/1 to 1.6/1, and most preferably 1.4/1.

The group R⁴ can be a monovalent hydrocarbon group having from 1 to 10 carbon atoms or an alkenyl group having from 2 to 10 carbon atoms as described above. Highly preferred monovalent hydrocarbon groups for R⁴ are methyl or phenyl and a highly preferred alkenyl group is vinyl.

Siloxane resins useful in the release modifier are exemplified by siloxane resins consisting essentially of: Me₃SiO_{1/2} (M) and SiO_{4/2} (Q) units, consisting essentially of: Me₂ViSiO_{1/2} (M) and SiO_{4/2} (Q) units, and consisting essentially of: Me₃SiO_{1/2} (M), Me₂ViSiO_{1/2} (M), and SiO_{4/2} (Q) units, wherein Me denotes methyl, Vi denotes vinyl, and the molar ratio of M to Q units is from 0.6/1 to 1.9/1.

The siloxane resin is prepared by well known methods. It is preferably prepared by the silica hydrosol capping process of U.S. Patent 2,676,182, as modified by U.S. Patent 3,627,851 and U.S. Patent No. 3,772,247 which teach how to prepare siloxane resins that are useful in the instant invention. Further, the siloxane resins can be prepared by the cohydrolysis of a trialkyl hydrolyzable silane and alkyl silicate as described in U.S. Patent 2,857,356.

It is preferred that from 10 to 1000 parts by weight of siloxane resin be used, and it is highly preferred that from 100 to 150 parts by weight of siloxane resin be employed per 100 parts by weight of Component (i).

The release modifier can further comprise an inhibitor. The inhibitor can be any material that is known to be, or can be, used to inhibit the catalytic activity of platinum group metal-containing catalysts. By the term "inhibitor", it is meant herein a material that retards the room temperature curing of a curable mixture of an alkenyl polydiorganosiloxane, an organohydrogensiloxane and a platinum catalyst, when incorporated therein in small amounts, such as less than 10 parts by weight of the composition, without preventing the elevated curing of the mixture. Examples of suitable inhibitors include ethylenically or aromatically unsaturated amides, acetylenic compounds including acetylenic alcohols and silylated acetylenic alcohols, ethylenically unsaturated isocyanates, olefinic siloxanes, unsaturated hydrocarbon diesters, conjugated ene-ynes, cyclic siloxanes, hydroperoxides, nitriles and diaziridines.

Preferred inhibitors include acetylenic alcohols such as those disclosed in U.S. Patent 3,445,420, including ethynylcyclohexanol and methylbutynol, unsaturated carboxylic esters such as diallyl maleate and dimethyl maleate, maleates and fumarates such as those disclosed in U.S. Patents 4,562,096 and 4,774,111, including diethyl fumarate, diallyl fumarate, and bis-(methoxyisopropyl) maleate, conjugated ene-ynes such as those disclosed in U.S. Patents 4,465,818, 4,472,563 and 4,559,396, and cyclic siloxanes such as methylvinyltetracyclosiloxane and methylvinylpentacyclosiloxane. Maleates, fumarates, acetylenic alcohols, silylated acetylenic alcohols, conjugated ene-ynes, and cyclic siloxanes are the preferred inhibitors for the compositions of this invention.

The amount of inhibitor to be used in the release modifier of this invention is not critical. It is preferred that from 0.1 to 10 parts by weight of inhibitor be used per 100 parts by weight of component (i). The release modifier can further comprise any platinum group metal-containing catalyst component which facilitates the reaction of silicon-bonded hydrogen atoms with silicon-bonded alkenyl radicals. By platinum group, it is meant herein ruthenium, rhodium, palladium, osmium, iridium and platinum.

The platinum group metal-containing catalyst is preferably a platinum containing catalyst component since they are the most widely used and available and because they provide a more favorable effect for the compositions of this invention in terms of improved release force. Preferred platinum-containing catalysts include chloroplatinic acid, alcohol modified chloroplatinic acids, olefin complexes of chloroplatinic acid, complexes of chloroplatinic acid and divinyltetramethyldisiloxane, fine platinum particles adsorbed on carbon carriers, and platinum black.

A particularly preferred platinum-containing catalyst component in the compositions of this invention is a form of chloroplatinic acid, either as the commonly available hexahydrate form or as the anhydrous form, as taught by U.S. Patent 2,823,218. Another particularly useful catalyst is the composition that is obtained when chloroplatinic acid is reacted with an aliphatically unsaturated organosilicon compound such as divinyltetramethyldisiloxane, as disclosed by U.S. Patent 3,419,593, because of its easy dispersibility in organosilicon systems.

The platinum catalysts are well known in the art, many of these being available commercially, and further description thereof is considered unnecessary.

The amount of platinum group metal-containing catalyst component that is used is not narrowly limited as long as there is a sufficient amount to accelerate a room temperature reaction between an organohydrogensiloxane and an alkenyl organopolysiloxane and not so much as to make its action uncontrollable by the use of an inhibitor. The exact necessary amount of this catalyst component will depend on the particular catalyst utilized and is not easily predictable. However, for platinum-containing catalysts, the amount can be as low as one part by weight of platinum for every one million parts by weight of Component (i). However, preferably the catalyst is added at an amount of 10 to 10,000 parts for every one million parts of (i), and it is highly preferred that the amount is at 50 to 250 parts by weight of platinum for every one million parts by weight of (i).

The release modifiers of this invention are prepared by homogeneously mixing Components (i) and (ii) and any optional components in any order, using any suitable mixing means, such as a spatula, a drum roller, a mechanical stirrer, a three-roll mill, a sigma blade mixer, a bread dough mixer and a two-roll mill.

The present invention further relates to a curable silicone release coating composition comprising (A) an organopolysiloxane containing at least two alkenyl groups per molecule, (B) an organohydrogensilicon compound selected from the group consisting of (i) a linear organohydrogenpolysiloxane having at least two silicon-bonded hydrogen atoms per molecule, (ii) a siloxane resin having the formula (R₃SiO_{1/2})ₐ(HR₂SiO_{1/2})_{b}(SiO_{4/2})_{c} wherein R is a monovalent hydrocarbon group having from 1 to 10 carbon atoms, a has a value of 1 to 25, b has a value of 2 to 10, and c has a value of 1 to 50, and having a molar ratio of M units to Q units of from 0.6/1 to 4/1, and (iii) a mixture of (i) and (ii), (C) a platinum group metal-containing catalyst, and (D) a fluorosilicone resin consisting essentially of at least one R¹₃SiO_{1/2} (M) unit and at least one SiO_{4/2} (Q) unit wherein R¹ is independently selected from the group consisting of a monovalent hydrocarbon group having from 1 to 10 carbon atoms, an alkenyl group having from 2 to 10 carbon atoms, and a fluorine atom-containing group having the formula -R²B wherein R² is an alkylene group having at least 2 carbon atoms and B is a perfluoroalkyl group having from 1 to 12 carbon atoms, the molar ratio of M units to Q units ranges from 0.8/1 to 4/1, and with the proviso that there is on average at least one fluorine atom-containing group, as defined above, per molecule.

Component (A) in the release coating compositions of this invention is as described above for the release modifier including preferred embodiments thereof. It is highly preferred that component (A) is an organopolysiloxane having its formula selected from the group consisting of ViMe₂SiO(Me₂SiO)ₓSiMe₂Vi, Me₃SiO(Me₂SiO)ₓ(MeViSiO)_{y}SiMe₃, Me₃SiO(MeViSiO)_{y}SiMe₃, ViMe₂SiO(Me₂SiO)ₓ(MeViSiO)_{y}SiMe₂Vi, ViMe₂SiO(MeViSiO)_{y}SiMe₂Vi, HexMe₂SiO(Me₂SiO)ₓSiMe₂Hex, Me₃SiO(Me₂SiO)ₓ(MeHexSiO)_{y}SiMe₃, Me₃SiO(MeHexSiO)_{y}SiMe₃, HexMe₂SiO(Me₂SiO)ₓ(MeHexSiO)_{y}SiMe₂Hex and HexMe₂SiO(MeHexSiO)_{y}SiMe₂Hex wherein Me, Vi and Hex denote methyl, vinyl and 5-hexenyl, respectively, x has a value of from greater than zero to 7000, and y has a value of from greater than zero to 350. Preferably x has a value of from 10 to 200, and y has a value of from 1 to 10.

Component (B) is (i) a linear organohydrogenpolysiloxane having at least two silicon-bonded hydrogen atoms per molecule. Component (B) is exemplified by bis (trimethylsiloxy) dimethyldihydrogendisiloxane, heptamethylhydrogentrisiloxane, hexamethyldihydrogentrisiloxane, methylhydrogencyclosiloxanes, pentamethylpentahydrogencyclopentasiloxane, pentamethylhydrogendisiloxane, polymethylhydrogensiloxanes, tetramethyltetrahydrogencyclotetrasiloxane, tetramethyldihydrogendisiloxane and methylhydrogensiloxane-dimethylsiloxane copolymers. The disclosure of U.S. Patent 4,154,714, shows preferred linear organohydrogenpolysiloxanes. The viscosity at 25°C. of (B) (i) is preferably 1 to 1,000 mPa·s, and it is highly preferred that the viscosity of component (B) is from 5 to 500 mPa·s.

It is particularly preferred that component (B) (i) is a compound having its formula selected from the group consisting of HMe₂SiO(Me₂SiO)_{d}(MeHSiO)ₑSiMe₂H, HMe₂SiO(Me₂SiO)_{d}SiMe₂H, Me₃SiO(Me₂SiO)_{d}(MeHSiO)ₑSiMe₃, HMe₂SiO(MeHSiO)ₑSiMe₂H and Me₃SiO(MeHSiO)ₑSiMe₃ wherein Me denotes methyl wherein d has a value of from greater than zero to 1000 and e has a value of from greater than zero to 200.

The linear organohydrogensiloxanes of Component (B)(i) are well known in the art, many of these being available commercially, and further description thereof is considered unnecessary.

Component (B) may be (ii) a siloxane resin having the formula (R₃SiO_{1/2})ₐ(HR₂SiO_{1/2})_{b}(SiO_{4/2})_{c} wherein R is a monovalent hydrocarbon group having from 1 to 10 carbon atoms, a has a value of 1 to 25, b has a value of 2 to 10, c has a value of 1 to 50, and having a molar ratio of M units to Q units of from 0.6/1 to 4/1, and preferably from 1/1 to 3/1, and most preferably about 2/1. The monovalent hydrocarbon groups of R are as defined above including preferred embodiments thereof. It is preferred that R be methyl. It is preferred that a have a value of 6 to 14, b have a value from 3 to 5, and c have a value of 4 to 15. It is especially preferred that b is 3.

These siloxane resins can be prepared by dropwise addition of an alkyl silicate (alkyl orthosilicate or a partial hydrolysis condensate of alkyl orthosilicate) into a mixture of aqueous hydrochloric acid which contains at least 5% hydrogen chloride and a trialkylsilane or a disiloxane or a mixture thereof, at a temperature of from 0 to 90°C. with stirring as is described by U.S. Patent 4,707,531 or by a continuous process wherein a constant ratio of reactants is maintained during the process described in U.S. Patent 5,391,673.

Component (B) may be (iii) a mixture of (i) and (ii) described above. The SiH equivalent ratio of Component (B)(i) to (B)(ii) is from 1/99 to 99/1, and is preferably from 10/90 to 90/10.

The amount of Component (B) that is used in the compositions of this invention is not narrowly limited. The amounts, expressed in terms of the ratio of the number of silicon-bonded hydrogen atoms of Component (B) to the number of silicon- bonded alkenyl groups of Component (A), should be sufficient to provide a ratio of at least 1/100 to 100/1, preferably from 1/2 to 20/1, and most preferably from 1/2 to 2/1.

It is preferred that from 0.5 to 90 parts by weight of Component (B) be used, and it is highly preferred that from 2 to 20 parts by weight of Component (B) be employed per 100 parts by weight of Component (A).

Component (C) is a platinum group metal-containing catalyst as described hereinabove for the release modifier including preferred embodiments thereof. Preferably, (C) is selected from the group consisting of chloroplatinic acid, alcohol modified chloroplatinic acids, olefin complexes of chloroplatinic acid, complexes of chloroplatinic acid and divinyltetramethyldisiloxane, fine platinum particles adsorbed on carbon carriers and platinum black. The amount of catalyst can be as low as one part by weight of platinum for every one million parts by weight of Component (A). Component (C) is preferably added at an amount of 10 to 10,000 parts for every one million parts of (A), and it is highly preferred that the amount is at 50 to 250 parts by weight of platinum for every one million parts by weight of (A).

The fluorosilicone resins for use as component (D) in this invention are as described above for the release modifier including preferred embodiments thereof.

Preferred fluorosilicone resins useful as component (D) in this invention are exemplified by flurosilicone resins essentially consisting of: R¹Me₂SiO_{1/2} (M) and SiO_{4/2} (Q) units, essentially consisting of: R¹MeViSiO_{1/2} (M) and SiO_{4/2} (Q) units, essentially consisting of: R¹Me₂SiO_{1/2} (M), Me₃SiO_{1/2} (M) and SiO_{4/2} (Q) units, essentially consisting of: R¹Me₂SiO_{1/2} (M), Me₂ViSiO_{1/2} (M) and SiO_{4/2} (Q) units, and essentially consisting of: R¹Me₂SiO_{1/2} (M), Me₂ViSiO_{1/2} (M), Me₃SiO_{1/2} (M) and SiO_{4/2} (Q) units wherein Me denotes methyl, Vi denotes vinyl, R¹ is a group having the formula -R²B wherein R² is selected from the group consisting of -CH₂CH₂- and -CH₂CH₂CH₂-, and B is selected from -(CF₂)₃CF₃, -CF₂CF(CF₃)₂, -C(CF₃)₃ or -CF(CF₃)CF₂CF₃, and the molar ratio of M units to Q units is from 2/1 to 4/1.

It is preferred that from 0.5 to 150 parts by weight of Component (D) be used, and it is highly preferred that from 1 to 30 parts by weight of Component (D) be employed per 100 parts by weight of Component (A).

The curable silicone release coating compositions of this invention can further comprise (E) an inhibitor. The inhibitor is as described above for the release modifier including preferred embodiments thereof. Maleates, fumarates, acetylenic alcohols, silylated acetylenic alcohols and conjugated ene-ynes are the preferred inhibitors for the release coatings of this invention.

The amount of inhibitor to be used in the release coating compositions of this invention is not critical. It is preferred that from 0.1 to 10 parts by weight of inhibitor be used per 100 parts by weight of component (A).

The release coatings of this invention can further comprise a siloxane resin essentiallly consisting of at least one R³₃SiO_{1/2} (M) unit and at least one SiO_{4/2} (Q) unit wherein R³ is independently selected from the group consisting of a monovalent hydrocarbon group having from 1 to 10 carbon atoms and an alkenyl group having from 2 to 10 carbon atoms as described above for the release modifier including preferred embodiments thereof.

Siloxane resins useful in the release coating are exemplified by siloxane resins essentially consisting of: Me₃SiO_{1/2} (M) and SiO_{4/2} (Q) units, essentially consisting of: Me₂ViSiO_{1/2} (M) and SiO_{4/2} (Q) units, and essentially consisting of: Me₃SiO_{1/2} (M), Me₂ViSiO_{1/2} (M) and SiO_{4/2} (Q) units, wherein Me denotes methyl, Vi denotes vinyl and the molar ratio of M to Q units is from 0.6/1 to 1.9/1.

It is preferred that from 0 to 150 parts by weight of siloxane resin be used, and it is highly preferred that from 5 to 50 parts by weight of siloxane resin be employed per 100 parts by weight of Component (A).

The release coatings of this invention may additionally comprise a bath life extender compound in a total amount sufficient to further retard the curing reaction at room temperature such as those described in U.S. Patent 5,036,117. Examples of suitable bath life extender compounds include compounds which contain one or more primary or secondary alcohol groups, carboxylic acids (including compounds which yield carboxylic acids when exposed to water at room temperature), cyclic ethers and water. Included in this group are the primary and secondary alcohols; diols and triols, such as ethylene glycol, propylene glycol and glycerine; partial ethers of diols and triols, such as 2-methoxyethanol, 2-methoxypropanol and 2-methoxyisopropanol; tetrahydrofuran; water and aqueous solutions of mineral acids, alkalis and salts. Primary and secondary alcohols, preferably having fewer than 10 carbon atoms, are the most preferred for the compositions of this invention. Examples thereof include methanol, 1-butanol, 2-butanol, tetradecanol and other alkanols, such as ethanol, normal- and iso-propanol, iso-butanol and the normal-, secondary- and iso-pentanols, -hexanols, -heptanols, and octanols; benzyl alcohol, phenol, and other aromatic alcohols such as methylphenyl carbinol, and 2-phenylethyl alcohol; allyl alcohol and cyclohexanol. It is highly preferred that the bath life extender is benzyl alcohol or water.

The amount of bath life extender to be used in the compositions of this invention is not critical and is merely that amount that will provide a longer bath life for the composition than the bath life of an identical composition that does not contain the extender. The amount of component bath life extender that is used can be 10 parts by weight per 100 parts of Component (A). Preferably, the amount of bath life extender used in the compositions of this invention falls within the range of 0.1 to 5 parts by weight, and most preferably 1 to 3 parts by weight per 100 parts of component (A).

The release coatings of the present invention can further comprise a diluent. Examples of suitable diluents include aliphatic hydrocarbons such as pentane, hexane, heptane, octane, nonane; aromatic hydrocarbons such as benzene, toluene, and xylene; ketones such as acetone, methylethyl ketone, and methylisobutyl ketone, and halogenated diluents such as fluorine, chlorine and bromine-substituted aliphatic or aromatic hydrocarbons such as trichloroethane, perchloroethylene or bromobenzene. Two or more diluents may be used together.

The amount of diluent is not critical and may be readily determined by one skilled in the art. The compositions of this invention may contain up to 10,000 parts by weight of diluent, however, it is preferred that from 500 to 2,000 parts by weight be employed per 100 parts by weight of component (A).

The release coatings of this invention are prepared by homogeneously mixing Components (A), (B), (C), (D), and optionally (E), and any other optional components in any order, using any suitable mixing means, such as a spatula, a drum roller, a mechanical stirrer, a three-roll mill, a sigma blade mixer, a bread dough mixer and a two-roll mill. For storage stability purposes, it is preferred to keep components (A) and (C) separate from component (B). This is achieved, for example, by mixing components (A), (C), and optionally part of component (E) as a first mixture, and mixing components (B) and (D) with the rest of component (E) as a second mixture. Alternatively, each of the components may be stored and supplied separately. In yet another option, component (A) and (D) are supplied as a first part, component (B) as a second part, and a mixture of components (C) and optionally (E) as a third part. Each part may include some of Component (E) and any other optional ingredients. Immediately prior to using the composition for application to substrates the different parts and/or mixtures could be admixed in the required ratios, for example, 1/1, 10/1 or even 100/1.

The release coatings of this invention can also contain any optional components commonly used in platinum group metal catalyzed organosilicon compositions, such as reinforcing and extending fillers, hydrocarbons and halohydrocarbons free of aliphatic unsaturation, colorants, stabilizers, adhesion modifiers, alpha-olefins, especially C₁₂ to C₁₈ alpha-olefins, and adhesive-release modifiers other than those described above.

The compositions of this invention have utility as formable compositions to provide organosilicon articles such as O-rings, tubing, wire-coating, gaskets, encapsulant and sealant compositions, and as coating compositions. The compositions of the present invention have particular utility as release coatings.

In another aspect, the present invention relates to a coated substrate obtained by a method comprising the steps of: (I) applying a curable silicone coating composition on the surface of a substrate wherein the composition comprises the curable silicone release coating composition of this invention delineated hereinabove, and (II) exposing the coating and substrate to an energy source selected from the group consisting of (i) heat and (ii) actinic radiation in an amount sufficient to cure the coating. The coated substrate of this invention can further be prepared by (III) applying an adhesive on the coating after step (II). The curable silicone coating composition is the composition as delineated above and any optional ingredients which are all delineated above, including amounts and preferred embodiments thereof.

By actinic radiation, it is meant ultraviolet light; electron beam radiation; and alpha, beta, gamma and x-rays. By heat, it is meant infrared radiation, hot-air or microwave radiation. Of course, actinic radiation is frequently accompanied by heat and the use of a combination of the two falls within the scope and spirit of the present method. In the preferred method of this invention, the coating step can be accomplished by any suitable manner known in the art, such as by spreading, brushing, extruding, spraying, gravure, kiss-roll and air-knife.

In a preferred embodiment of the instant method, the solid substrate is a flexible sheet material such as paper, polyolefin film and polyolefin-coated paper or foil. Other suitable solid substrates that can be coated by the method of this invention include other cellulosic materials such as wood, cardboard and cotton; metallic materials such as aluminum, copper, steel and silver; siliceous materials such as glass and stone; and synthetic polymer materials such as polyolefins, polyamides, polyesters and polyacrylates. As to form, the solid substrate can be substantially sheet-like, such as a peelable release liner for pressure sensitive adhesive; a fabric or a foil; or substantially three-dimensional in form.

After the liquid curable composition has been coated onto a substrate it is heated and/or irradiated with actinic radiation, as noted herein, to cure the liquid coating and to adhere it to the substrate.

In a preferred embodiment of the method of this invention, a flexible sheet material, such as paper, metal foil or tapestock, is coated with a thin coating of the liquid curable composition, preferably in a continuous manner and the thus coated material is then heated and/or irradiated to rapidly cure the coating, to provide a sheetlike material bearing on at least one surface thereof an adhesive-releasing coating. The adhesive-releasing coating is subsequently brought into contact with a pressure sensitive adhesive, preferably in an in-line manner, to form an article having a peelable, i.e. releasable, adhesive/coating interface. Examples of such an article include, adhesive labels having a peelable backing, adhesive tape in roll form and adhesive packaged in a strippable container. The pressure sensitive adhesive can be non-silicone-based, such as the well-known acrylic or rubber types or silicone-based, such as the peroxide or platinum-curable polydiorganosiloxane-based adhesives.

The method of this invention is also applicable to adhesive materials, other than pressure sensitive adhesives. Examples of said adhesive materials include foods, asphalt and gum polymers.

The following examples are disclosed to further teach the invention which is properly delineated by the appended claims. All amounts (parts and percentages) are by weight unless otherwise indicated. Viscosities were measured with a rotating spindle viscometer (1 centistoke (cS) = 1 mm²/s). In the examples hereinbelow, Me denotes methyl, Vi denotes vinyl and Hex denotes 5-hexenyl.

The following materials were employed in preparing the compositions in the examples:
Organopolysiloxane A was a compound having the formula ViMe₂SiO(Me₂SiO)ₓSiMe₂Vi having a Dp (degree of polymerization) of 25.
Organopolysiloxane B was a compound having the formula HexMe₂SiO(Me₂SiO)ₐSiMe₂Hex having a Dp of 30.
Organopolysiloxane C was a compound having the formula HexMe₂SiO(Me₂SiO)ₓ(MeHexSiO)_{y}SiMe₂Hex having 2 mole percent hexenyl groups, and having a Dp of 150.

Organohydrogensiloxane A was a compound having the formula Me₃SiO(Me₂SiO)_{d}(MeHSiO)ₑSiMe₃ having a total average Dp of 40 and 70 mole % methylhydrogen moiety on the siloxane chain.

Catalyst A was a platinum catalyst (a soluble platinum complex containing about 0.50% platinum formed from chloroplatinic acid and divinyltetramethyldisiloxane).

Inhibitor A was bis(2-methoxy-1-methylethyl) maleate.

A fluorosilicone resin was prepared by reacting 200 grams of a solution containing 50 weight percent of a siloxane resin copolymer consisting essentially of Me₃SiO_{1/2} (M), Me₂OHSiO_{1/2} (M), and SiO₂ units wherein Me denotes methyl, OH denotes hydroxyl, the molar ratio of M units to Q units is 0.7/1, and wherein the siloxane resin copolymer contains from 0.5 to 1.45 weight percent of hydroxyl in xylene with 2.75 grams dimethyl(perfluorobutylethyl) chlorosilane under a nitrogen blanket at temperatures of 70 to 80°C. for 1 hour. Next, deionized water was added to the flask, and the residual HCl generated during the capping process was washed off by boiling off the water to a Dean Stark trap. This washing process was repeated until the solution became neutral. Next, the required amount of dimethylvinylchlorosilane was added to the solution to cap the rest of the hydroxyl groups on the resin (10.2 grams), and then reacted and washed as described above. The resulting solution was determined to be a fluorosilicone resin (denoted fluorosilicone resin A) essentially consisting of: RMe₂SiO_{1/2} (M), Me₂ViSiO_{1/2} (M), Me₃SiO_{1/2} (M), and SiO_{4/2} (Q) units wherein R denotes the group -CH₂CH₂(CF₂)₃CF₃ and the molar ratio of M units to Q units is in the range from 0.6/1 to 2/1.

Siloxane resin A was a benzene soluble siloxane resin copolymer essentially consisting of Me₃SiO_{1/2} (M), Me₂ViSiO_{1/2} (M), and SiO₂ units wherein Me denotes methyl, Vi denotes vinyl, the molar ratio of M units to Q units is about 0.7/1, and wherein the siloxane resin copolymer contains from 1.75 to 2.3 weight percent of vinyl.

Siloxane resin B was a compound having the formula Me₃SiO_{1/2})ₐ(HMe₂SiO_{1/2})_{b}(SiO_{4/2})_{c} wherein Me denotes methyl, having an M to Q molar ratio of 2/1, having 3 silicon-bonded hydrogen atoms per molecule, having a viscosity of 35 mPa·s (1 mPa·s = 1 centipoise (cP)), having 0.3 weight percent of SiH, and a has a value of 5, b has a value of 3 and c has a value of 4.

### Example 1

A release modifier was prepared by mixing 55 parts of fluorosilicone resin A with 45 parts of Organopolysiloxane A. The release modifier was denoted RM 1 (Release Modifier 1).

A coating was prepared by adding to a 120 ml jar 97.3 parts of Organopolysiloxane C, 1.9 parts of Catalyst A, and 0.8 parts of Inhibitor A, and then stirring this mixture. This was denoted Coating A. A release coating composition was then prepared by mixing an amount of Coating A, an amount of RM 1, and an amount of a mixture of Siloxane resin B and Organohydrogensiloxane A in a SiH equivalent ratio of 90 equivalents of SiH from Siloxane Resin B to 10 equivalents of SiH from Organohydrogensiloxane A (denoted SiH in Table 1) on a rotary mixer for 10 minutes. These components were mixed in the amounts (parts) denoted in Table 1 below. Thus, six silicone release coating compositions were prepared (denoted REL 1-REL 6 in Table 1) each containing varying amounts of the release modifier.

The six resulting silicone release coating compositions were coated onto S2S kraft paper by using a hand roll blade coater at 1.14 gm/sqm thickness. The coated papers were cured in the forced air oven of a pilot coater at 300°C. for 15 seconds. A plastic film coated with a commercially available precast hotmelt pressure sensitive adhesive was relaminated over the newly prepared release coating surface by using a 2.3 kg hard rubber coated roller. The coating was aged for 1 day at room temperature before the lamination. The laminates were also aged for 1 additional day at room temperature under pressure. The laminates were cut into strips having 25.4 mm width for a release force measurement. The release test was carried out at 5 delaminating speeds, 0.3 meters per min. (m/min), 1 m/min., 10 m/min., 100 m/min. and 300 m/min., respectively, using an Imass(R) high speed peel tester. The average of four measurements of the release force at each speed was taken and the resulting average value is denoted in Table 2 below for each sample. The release force is reported in grams in Table 2.

### Example 2

A release modifier was prepared by mixing 50 parts of a fluorosilicone resin A with 50 parts of Organopolysiloxane B. The release modifier was denoted RM 2.

Another release modifier was prepared by mixing 50 parts of Siloxane Resin A with 50 parts of Organopolysiloxane B. The release modifier was denoted RM 3. Next, RM2 was mixed with RM3 in various weight ratios. The weight ratio of RM2 to RM3 is shown in Table 3 below. The mixture of RM2 and RM3 was denoted RM4.

A comparative release modifier was prepared by first mixing 75.2 parts of Siloxane Resin A, 21.1 parts of a C₁₈ alpha-olefin, 3.7 parts of a compound having the formula ViMe₂SiO(Me₂SiO)ₓSiMe₂Vi and having a viscosity in a range from 7,000 to 12,000 (mPa·s) at 25°C. Next, to 96.9 parts of this mixture was added 1.8 parts of Catalyst A, and 1.3 parts of Inhibitor A and the mixture was then stirred. The resulting mixture was denoted CRM 1.

A coating was prepared by adding to a 120 ml jar 97.3 parts of Organopolysiloxane C, 1.9 parts of Catalyst A, and 0.8 part of Inhibitor A, and then stirring this mixture and this was denoted Coating A. A release coating composition was then prepared by mixing on a rotary mixer for 10 minutes: an amount of Coating A, an amount of release modifier, and an amount of a mixture of Siloxane resin B and Organohydrogensiloxane A. The amount (parts) of Coating A, the amount (parts) of release modifier, and the amount (parts) of the Siloxane resin B-Organohydrogensiloxane A mixture (denoted SiH), is shown in Table 3 below.

CREL 1 (Comparative Release Coating 1) was prepared using RM 3, REL 7-10 were prepared using RM 4, REL 11 was prepared using RM 2, and CREL 2 was prepared using CRM 1.

The SiH equivalent ratio of Siloxane Resin B to Organohydrogensiloxane A was as follows: 50 equivalents of SiH from Siloxane Resin B to 50 equivalents of SiH from Organohydrogensiloxane A for CREL 1 and REL 7-10, a SiH equivalent ratio of 90 equivalents of SiH from Siloxane Resin B to 10 equivalents of SiH from organohydrogensiloxane A in REL 11, and in CREL 2 there was no Siloxane Resin B (i.e. it was a 100 percent Organohydrogensiloxane A).

The six resulting silicone release coating compositions were then tested for release force according to the procedure described in Example 1. The release force is reported in grams in Table 4.

### Example 3

A release modifier was prepared by mixing RM1 with RM3 in various weight ratios. The weight ratio of RM 1 to RM3 is shown in Table 5 hereinbelow. This release modifier was denoted RM 5.

A coating was prepared by adding to a 120 ml jar 97.3 parts of Organopolysiloxane C, 1.9 parts of Catalyst A, and 0.8 part of Inhibitor A, and then stirring this mixture and this was denoted Coating A. A release coating composition was then prepared by mixing on a rotary mixer for 10 minutes: an amount of Coating A, an amount of release modifier and an amount of a mixture of Siloxane resin B and Organohydrogensiloxane A. The amount (parts) of Coating A, the amount (parts) of release modifier and the amount (parts) of the Siloxane resin B-Organohydrogensiloxane A mixture (denoted SiH), is shown in Table 5 below.

CREL 3 was prepared using RM 3, REL 12-15 were prepared using RM 5, REL 16 was prepared using RM 1, and CREL 4 was prepared using CRM 1.

The SiH equivalent ratio of Siloxane Resin B to Organohydrogensiloxane A was as follows: 50 equivalents of SiH from Siloxane Resin B to 50 equivalents of SiH from Organohydrogensiloxane A for CREL 3 and REL 12-15, an SiH equivalent ratio of 90 equivalents of SiH from Siloxane Resin B to 10 equivalents of SiH from Organohydrogensiloxane A in REL 16, and in CREL 4 there was no Siloxane Resin B (i.e. it was a 100 percent Organohydrogensiloxane A).

The six resulting silicone release coating compositions were then tested for release force according to the procedure described in Example 1. The release force is reported in grams in Table 6.

**Table 1**

| Release Coating | Coating A (parts) | RM 1 (parts) | SiH (parts) |
|---|---|---|---|
| REL 1 | 90 | 10 | 16.5 |
| REL 2 | 80 | 20 | 17.9 |
| REL 3 | 70 | 30 | 19.3 |
| REL 4 | 40 | 60 | 23.4 |
| REL 5 | 30 | 70 | 24.8 |
| REL 6 | 20 | 80 | 26.2 |

**Table 2**

| Release Coating | Release Force (grams/25.4 mm) | | | | |
|---|---|---|---|---|---|
| | 0.3 | 1 | 10 | 100 | 300 |
| REL 1 | 18.4 | 23.9 | 41.1 | 95.7 | 117.1 |
| REL 2 | 65.5 | 33.1 | 63.9 | 97.8 | 125.9 |
| REL 3 | 105.3 | 52.1 | 82.1 | 108.0 | 137.8 |
| REL 4 | 426.5 | 402.0 | 252.3 | 248.4 | 212.8 |
| REL 5 | 627.0 | WELD | 274.8 | 281.7 | 247.2 |
| REL 6 | 749.0 | WELD | WELD | WELD | WELD |

**Table 3**

| Release Coating | Coating A (parts) | RM2/RM3 wt. ratio | Release Modifier (parts) | SiH (parts) |
|---|---|---|---|---|
| CREL 1 | 40 | 0/100 | 60 | 15.6 |
| REL 7 | 40 | 10/90 | 60 | 15.5 |
| REL 8 | 40 | 20/80 | 60 | 15.4 |
| REL 9 | 40 | 30/70 | 60 | 15.4 |
| REL 10 | 40 | 50/50 | 60 | 15.2 |
| REL 11 | 40 | 100/0 | 60 | 21.3 |
| CREL 2 | 40 | ----- | 60 | 11.9 |

**Table 4**

| Release Coating | Release Force (grams/25.4 mm) | | | | |
|---|---|---|---|---|---|
| | 0.3 | 1 | 10 | 100 | 300 |
| CREL 1 | 32.5 | 26.7 | 58.2 | 139.9 | 137.7 |
| REL 7 | 80.4 | 42.4 | 66.5 | 130.5 | 162.9 |
| REL 8 | 119.0 | 71.5 | 73.6 | 136.0 | 158.3 |
| REL 9 | 217.0 | 89.3 | 81.1 | 126.3 | 152.6 |
| REL 10 | 300.0 | 145.1 | 109.5 | 149.7 | 149.0 |
| REL 11 | 426.5 | 402.0 | 252.3 | 248.4 | 212.8 |
| CREL 2 | 242.2 | 273.3 | 142.7 | 108.7 | 81.3 |

**Table 5**

| Release Coating | Coating A (parts) | RM1/RM3 wt. ratio | Release Modifier (parts) | SiH (parts) |
|---|---|---|---|---|
| CREL 3 | 40 | 0/100 | 60 | 15.6 |
| REL 12 | 40 | 10/90 | 60 | 15.6 |
| REL 13 | 40 | 20/80 | 60 | 16.0 |
| REL 14 | 40 | 30/70 | 60 | 16.3 |
| REL 15 | 40 | 50/50 | 60 | 16.5 |
| REL 16 | 40 | 100/0 | 60 | 26.5 |
| CREL 4 | 40 | ----- | 60 | 11.9 |

**Table 6**

| Release Coating | Release Force (grams/25.4 mm) | | | | |
|---|---|---|---|---|---|
| | 0.3 | 1 | 10 | 100 | 300 |
| CREL 3 | 32.5 | 26.7 | 58.2 | 139.9 | 137.7 |
| REL 12 | 78.9 | 51.6 | 70.2 | 151.5 | 183.8 |
| REL 13 | 129.0 | 79.8 | 92.5 | 140.0 | 178.7 |
| REL 14 | 200.5 | 134.2 | 88.9 | 144.0 | 161.1 |
| REL 15 | 306.5 | 229.5 | 130.4 | 139.3 | 154.4 |
| REL 16 | 426.5 | 402.0 | 252.3 | 248.4 | 212.8 |
| CREL 4 | 242.2 | 273.3 | 142.7 | 108.7 | 81.3 |

## Claims

1. A release modifier comprising a mixture of
(i) an organopolysiloxane having at least two alkenyl groups per molecule; and
(ii) a fluorosilicone resin essentially consisting of at least one R₃SiO_{1/2} (M) unit and at least one SiO_{4/2} (Q) unit wherein R is independently selected from the group consisting of a monovalent hydrocarbon group having from 1 to 10 carbon atoms, an alkenyl group having from 2 to 10 carbon atoms, and a fluorine atom-containing group having the formula -R¹B wherein R¹ is an alkylene group having at least 2 carbon atoms and B is a perfluoroalkyl group having from 1 to 12 carbon atoms, the molar ratio of M units to Q units ranges from 0.8/1 to 4/1, and with the proviso that there is on average at least one fluorine atom-containing group per molecule.

2. A release modifier according to claim 1 wherein (i) is an organopolysiloxane having its formula selected from the group consisting of ViMe₂SiO(Me₂SiO)ₓSiMe₂Vi, Me₃SiO(Me₂SiO)ₓ(MeViSiO)_{y}SiMe₃, Me₃SiO(MeViSiO)_{y}SiMe₃, ViMe₂SiO(Me₂SiO)ₓ(MeViSiO)_{y}SiMe₂Vi, ViMe₂SiO(MeViSiO)_{y}SiMe₂Vi, HexMe₂SiO(Me₂SiO)ₓSiMe₂Hex, Me₃SiO(Me₂SiO)ₓ(MeHexSiO)_{y}SiMe₃, Me₃SiO(MeHexSiO)_{y}SiMe₃, HexMe₂SiO(Me₂SiO)ₓ(MeHexSiO)_{y}SiMe₂Hex and HexMe₂SiO(MeHexSiO)_{y}SiMe₂Hex wherein Me, Vi and Hex denote methyl, vinyl, and 5-hexenyl, respectively, x has a value of from greater than 0 to 7000, and y has a value of from greater than 0 to 350.

3. A release modifier according to claim 1 wherein (ii) is a fluorosilicone resin selected from the group consisting of a flurosilicone resin essentially consisting of: RMe₂SiO_{1/2} (M) and SiO_{4/2} (Q) units, a fluorosilicone resin essentially consisting of: RMeViSiO_{1/2} (M) and SiO_{4/2} (Q) units, a fluorosilicone resin essentially consisting of: RMe₂SiO_{1/2} (M), Me₃SiO_{1/2} (M), and SiO_{4/2} (Q) units, a fluorosilicone resin essentially consisting of: RMe₂SiO_{1/2} (M), Me₂ViSiO_{1/2} (M), and SiO_{4/2} (Q) units, and a fluorosilicone resin essentially consisting of: RMe₂SiO_{1/2} (M), Me₂ViSiO_{1/2} (M), Me₃SiO_{1/2} (M), and SiO_{4/2} (Q) units wherein Me denotes methyl, Vi denotes vinyl, R is a group having the formula -R¹B wherein R¹ is selected from the group consisting of -CH₂CH₂- and -CH₂CH₂CH₂- and B is selected from the group consisting of -(CF₂)₃CF₃, -CF₂CF(CF₃)₂, -C(CF₃)₃ and -CF(CF₃)CF₂CF₃, and the molar ratio of M units to Q units is from 2/1 to 4/1.

4. A release modifier according to claim 1 wherein the release modifier further comprises at least one ingredient selected from the group consisting of a siloxane resin essentially consisting of at least one R⁴₃SiO_{1/2} (M) unit and at least one SiO_{4/2} (Q) unit wherein R⁴ is independently selected from a monovalent hydrocarbon group having from 1 to 10 carbon atoms or an alkenyl group having from 2 to 10 carbon atoms, and having a molar ratio of M units to Q units ranges from 0.4/1 to 4/1, an inhibitor and a platinum group-containing catalyst.

5. A release modifier according to claim 4 wherein said siloxane resin is selected from a siloxane resin essentially consisting of: Me₃SiO_{1/2} (M) and SiO_{4/2} (Q) units, a siloxane resin essentially consisting of: Me₂ViSiO_{1/2} (M) and SiO_{4/2} (Q) units, and a siloxane resin essentially consisting of: Me₃SiO_{1/2} (M), Me₂ViSiO_{1/2} (M), and SiO_{4/2} (Q) units, wherein Me denotes methyl, Vi denotes vinyl, and the molar ratio of M to Q units is from 0.6/1 to 1.9/1.

6. A release modifier according to claim 4 wherein the inhibitor is selected from maleates, fumarates, acetylenic alcohols, silylated acetylenic alcohols, conjugated ene-ynes and cyclic siloxanes.

7. A release modifier according to claim 4 wherein the platinum group-containing catalyst is selected from chloroplatinic acid, alcohol modified chloroplatinic acids, olefin complexes of chloroplatinic acid, complexes of chloroplatinic acid and divinyltetramethyldisiloxane, fine platinum particles adsorbed on carbon carriers and platinum black.

8. A curable silicone release coating composition comprising
(A') the release modifier of any of claims 1 to 7;
(B') an organohydrogensilicon compound selected from
(i) a linear organohydrogenpolysiloxane having at least two silicon-bonded hydrogen atoms per molecule, or
(ii) a siloxane resin having the formula (R₃SiO_{1/2})ₐ(HR₂SiO_{1/2})_{b}(SiO_{4/2})_{c} wherein R is a monovalent hydrocarbon group having from 1 to 10 carbon atoms, a has a value of 1 to 25, b has a value of 2 to 10, c has a value of 1 to 50, and having a molar ratio of M units to Q units of from 0.6/1 to 4/1, and
(C') a sufficient amount of a platinum group metal catalyst to cure said curable composition.

9. A composition according to claim 8, wherein (B')(i) is a compound having its formula selected from the group consisting of HMe₂SiO(Me₂SiO)_{d}(MeHSiO)ₑSiMe₂H, HMe₂SiO(Me₂SiO)_{d}SiMe₂H, Me₃SiO(Me₂SiO)_{d}(MeHSiO)ₑSiMe₃, HMe₂SiO(MeHSiO)ₑSiMe₂H, and Me₃SiO(MeHSiO)ₑSiMe₃ wherein Me denotes methyl wherein d has a value of from greater than zero to 1000 and e has a value of from greater than zero to 200.

10. A composition according to claim 8 wherein the composition further comprises (D') an inhibitor selected from the group consisting of maleates, fumarates, acetylenic alcohols, silylated acetylenic alcohols, conjugated ene-ynes and cyclic siloxanes.

11. A composition according to claim 8 further comprising a bath life extender selected from compounds which contain one or more primary or secondary alcohol groups, carboxylic acids, compounds which yield carboxylic acids when exposed to water at room temperature, cyclic ethers and water.

12. A composition according to claim 8 further comprising a diluent selected from the group consisting of pentane, hexane, heptane, octane, nonane, benzene, toluene, xylene, acetone, methylethyl ketone, and methylisobutyl ketone, trichloroethane, perchloroethylene and bromobenzene.

13. A coated substrate obtainable by a method comprising applying the curable silicone composition of any of claims 8 to 12 onto the surface of a substrate.

14. A coated substrate according to claim 13 wherein said method further comprises (II) exposing said coating and substrate to the ambient environment or heat for a sufficient time to accomplish cure of the coating.

15. A coated substrate according to claim 14 further comprising the application of a pressure sensitive adhesive onto said substrate after step (II).
